# EUROPEAN PATENT SPECIFICATION

(11) **EP 1 911 993 B1**
(45) Date of publication and mention of the grant of the patent: **28.09.2011**
(21) Application number: 05851102.3
(22) Date of filing: 01.11.2005
(51) Int. Cl.: F16H 3/66

(54) **GEARBOX**
WECHSELGETRIEBE
BOITE DE VITESSES

(30) Priority: 29.07.2005 RU 2005124142
(43) Date of publication of application: 16.04.2008
(73) Proprietor: Obschestvo s Ogranichennoy Otvetstvennostyu "Kate", Moscow 113303 (RU)
(72) Inventor: NAGAYTSEV, Maxim Valerevich, Moscow, 117623 (RU); LYSKOV, Alexander Nikolaevich, Moscow, 127576 (RU); KHARITONOV, Sergey Alexandrovich, Mytischi Moskovskaya obl., 141021 (RU); SEMENOV, Alexander Vladimirovich, Vladimirskaya obl., 601550 (RU); PALEEV, Dmitriy Nikolaevich, Obninsk Kaluzhskaya obl., 249034 (RU)
(74) Representative: Hämmalov, Alla
(86) International application number: PCT/RU2005/000533
(87) International publication number: WO 2007/013834

(56) References cited:
- SU-A3- 955 876
- US-A- 5 226 862
- US-B2- 6 679 802
- MIKHAILOVSKI E.V. ET AL.: 'Ustroistvo avtomobiliya: Uchebnik dlya uchaschikhsya avtotransportnykh tekhnikumov, 6-e izdanie' M. MASHINOSTROENIE 1987, pages 188 - 189, XP008119457

## Description

The invention relates to the field of motor transport mechanical engineering, and it concerns construction of a step-by-step planetary gearbox, which can be applied in automatic transmissions controlled by means of an electronic unit and hydraulic equipment, destined for transport vehicles.

Torque and rotating frequency of an engine are transformed by means of a transmission in accordance with changing of conditions of a vehicle movement to provide for the vehicle movement both frontwards and backwards.

Automatic gearbox includes a planetary-type gearbox, providing for changing of torque applied to propelling device and of its rotating frequency. The gearbox also includes controlling friction elements, which are divided into two groups in accordance with their purpose: brakes and clutches. Friction-type clutches connect planetary gear elements between each other. Friction-type brakes connect planetary gear elements with gearbox case.

Application of planetary-type gearboxes in automatic transmissions of transport vehicles is conditioned by possibility of obtaining of a small-sized construction, compact with respect to composition, which easily fits well into space limited by body dimensions.

At the present time planetary-type gearboxes, used for transport vehicles and providing for seven forward gears and one reverse gear, include three planetary gear sets and six control elements. Nevertheless such schemes do not realize dynamic properties required for transmissions of transport vehicles; they reduce kinematical possibilities of gearbox and shorten its operating life. To improve dynamic properties, development engineers, who are dealing with designing and production of automatic gearboxes, use the fourth planetary gear set, thereby complicating the gearbox construction, or increase number of degrees-of-freedom. It results in increasing of controlling friction elements, which is necessary for putting into gear, and that, in its turn, leads to complicating of control system.

There is known a gearbox, comprising a planetary gear reducer, the first planetary gear set pinion carrier of which represents an output member of the gearbox, the second planetary gear set pinion carrier is connected with a crown gear of the first planetary gear set, sun pinion of the first planetary gear set is connected with a crown gear of the second planetary gear set and with the gearbox case by means of a friction brake, sun pinion of the second planetary gear set is connected with sun pinion of the third planetary gear set and with the gearbox case by means of friction brake, input member is connected with the third planetary gear set pinion carrier, a crown gear of the third planetary gear set is connected with the gearbox case by means of a friction brake, the second planetary gear set pinion carrier is connected with crown gear of the third planetary gear set by means of a controllable friction clutch coupling and with the third planetary gear set pinion carrier by means of a controllable friction clutch coupling, the third planetary gear set pinion carrier is connected with sun pinion of the third planetary gear set by means of controllable friction clutch coupling (US 6679802, Figure 11 A, F 16H 3/66, dated 28.08.2003).

The gearbox in question comprises three friction clutch couplings and three brakes to provide changing of torque ratio between input and output members. In the prototype gearbox gear shifting takes place due to pair-wise actuation of seven friction elements controlling links of planetary gear sets. It allows obtaining seven forward gears and one reverse gear.

The present invention is aimed to solve the engineering problem of increasing dynamic properties of a transport vehicle, using for this purpose the minimal possible number of control elements. The achievable at that technical result consists in expansion of kinematical possibilities of gearbox, increasing of its operating life and reducing of quantity of components, as well as it allows significantly expand number of types of transport vehicles, in which it is possible to install a gearbox with such a kinematical scheme.

The mentioned technical result is achieved by the fact that there in a gearbox, comprising a planetary gear reducer, the first planetary gear set pinion carrier of which represents an output member of the gearbox, the second planetary gear set pinion carrier is connected with a crown gear of the first planetary gear set, sun pinion of the first planetary gear set is connected with a crown gear of the second planetary gear set and with the gearbox case by means of a friction brake, sun pinion of the second planetary gear set is connected with sun pinion of the third planetary gear set and with the gearbox case by means of a friction brake, input member is connected with the third planetary gear set pinion carrier, a crown gear of the third planetary gear set is connected with the gearbox case by means of a friction brake, the input member is connected with the second planetary gear set pinion carrier by means of a controllable friction clutch coupling, the crown gear of the first planetary gear set is furnished with a friction brake to provide for its connection with the gearbox case, the input member is connected with the first planetary gear set sun pinion by means of controllable friction clutch coupling, the input member is connected with a torsion vibration damper.

The above-mentioned features are significant, and they are mutually connected between each other with formation of a stable aggregate of significant features, which is sufficient for obtaining the required technical result.

The present invention is illustrated with specific example, which, however, is not the only possible one, but it outwardly demonstrates possibility of achieving the required technical result by means of the quoted aggregate of features.

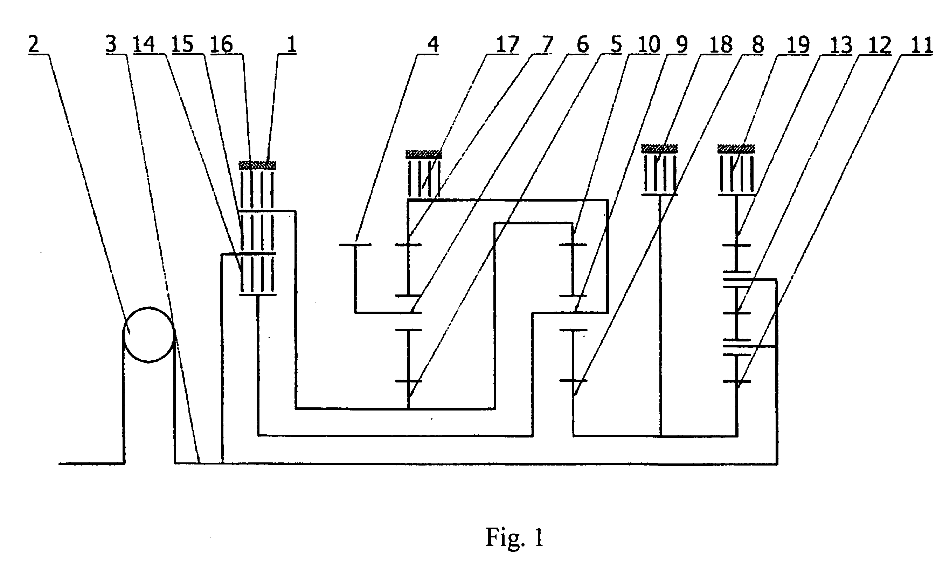

The subject matter of the suggested technical solution is illustrated by drawings, in which Figure 1 demonstrates kinematical scheme of a hydro-mechanic seven-speed gearbox for the transport vehicle transmission having one reverse gear.

In accordance with the invention a gearbox, comprising a planetary gear reducer, the first planetary gear set pinion carrier of which represents an output member of the gearbox, the second planetary gear set pinion carrier is connected with a crown gear of the first planetary gear set, sun pinion of the first planetary gear set is connected with a crown gear of the second planetary gear set and with the gearbox case by means of a friction brake, sun pinion of the second planetary gear set is connected with sun pinion of the third planetary gear set and with the gearbox case by means of a friction brake, input member is connected with the third planetary gear set pinion carrier, the input member is connected with the second planetary gear set pinion carrier by means of a controllable friction clutch coupling, the crown gear of the first planetary gear set is furnished with a friction brake to provide for its connection with the gearbox case, the input member is connected with the first planetary gear set sun pinion by means of controllable friction clutch coupling, the input member is connected with a torsion vibration damper.

Hereafter there is quoted an example of specific embodiment of a hydro-mechanic gearbox for an automatic transmission, for example, for a passenger car having cross-country capacity.

The automatic hydro-mechanic gearbox, realizing six forward gears and one reverse gear, comprises case 1, torsion vibration damper 2, input member 3, output member 4 and a planetary gear reducer, comprising planetary gear sets, two friction clutch couplings and four friction brakes.

In accordance with the invention, planetary gear reducer of the gearbox consists of three planetary gear sets. The first planetary gear set consists of sun pinion 5, pinion carrier 6 of planet wheels and crown gear 7 (epicycle). The second planetary gear set consists of sun pinion 8, pinion carrier 9 of planet wheels and crown gear 10 (epicycle). The third planetary gear set consists of sun pinion 11, pinion carrier 12 of planet wheels and crown gear 13 (epicycle). Input member 3 is connected by means of friction clutch coupling 14 with connected between each other crown gear 7 of the first planetary gear set and pinion carrier 9 of the second planetary gear set. Input member 3 is connected by means of friction clutch coupling 15 with connected between each other crown gear 10 of the second planetary gear set and sun pinion 5 of the first planetary gear set. Pinion carrier 12 of the third planetary gear set is connected with input member 3. Input member 3 is connected with torsion vibration damper 2. Friction brake 16 connects to the gearbox case 1 connected between each other crown gear 10 of the second planetary gear set and sun pinion 5 of the first planetary gear set.

Friction brake 17 connects to the gearbox case 1 connected between each other crown gear 7 of the first planetary gear set and pinion carrier 9 of the second planetary gear set. Friction brake 18 connects to the gearbox case 1 connected between each other sun pinion 11 of the third planetary gear set and sun pinion 8 of the second planetary gear set. Crown gear 13 of the third planetary gear set is connected with the gearbox case 1 by means of friction brake 19. Pinion carrier 6 of the first planetary gear set is connected with output member 4 of gearbox.

Such embodiment of gearbox in comparison with known 7-speed gearboxes of types MERCEDES 7G-TRONIC, BMW SMG III and others allows obtaining seven forward gears and one reverse gear, using for this purpose three planetary gear sets and six controlling friction elements. At that, in the suggested scheme there is no interruption of power flow in the process of gear shifting.

Provision of gearbox with the seventh forward gear has allowed making alterations into transmission ratios and into procedure of pair-wise actuation of controlling friction elements, as well as it has allowed refusing of application of hydraulic transformer, and instead to install into its place a torsion vibration damper, dimensions and mass of which are much smaller. Alteration of construction and succession of pair-wise actuation of control element allowed achieving the fact, that in the process of gear shifting there is no interruption of power flow. At the same time it allowed improving dynamic properties of gearbox, expanding kinematical possibilities of gearbox and increasing its operating life, as well as significant expanding of number of types of transport vehicles, into which it is possible to install a gearbox with such a kinematical scheme.

The automatic gearbox suggested in accordance with the present invention operates in the following manner.

After the moment when transport vehicle starts moving, there is carried out its acceleration up to the required speed by means of successive gear shifting from the 1st one to the 7th one. When the gearbox is in neutral position, no one of its controlling friction elements is turned on.

At the first forward gear there are actuated brakes 17 and 19, that means that rotational speed of crown gear 13 of the third planetary gear set and of pinion carrier 9 of the second planetary gear set, connected with crown gear 7 of the first planetary gear set is equal to zero.

Torque from input member 3 via pinion carrier 12 of the third planetary gear set is imparted to sun pinion 11 of the third planetary gear set and to connected with it sun pinion 8 of the second planetary gear set, and then it is imparted via crown gear 10 of the second planetary gear set and connected with it sun pinion 5 of the first planetary gear set to pinion carrier 6 of the first planetary gear set, connected directly to output member 4.

When shifting to the second forward gear, brake 19 is shutting down and coupling 15 is actuated, while brake 17 remains actuated. In such a way, rotational speed of pinion carrier 9 of the second planetary gear set, connected with crown gear 7 of the first planetary gear set, is equal to zero, and rotational speed of input member 3 is equal to rotational speed of sun pinion 5 of the first planetary gear set, connected with crown gear 10 of the second planetary gear set.

Torque from input member 3 via actuated friction clutch coupling 15 is imparted to sun pinion 5 of the first planetary gear set, and after that it is imparted to pinion carrier 6 of the first planetary gear set, connected directly to output member 4.

When shifting to the third forward gear, brake 17 is shutting down and brake 19 is actuated; coupling 15 remains being actuated. In such a way, rotational speed of crown gear 13 of the third planetary gear set is equal to zero, and rotational speed of input member 3 is equal to rotational speed of sun pinion 5 of the first planetary gear set, connected with crown gear 10 of the second planetary gear set.

Torque from input member 3 via actuated friction clutch coupling 15 is imparted to sun pinion 5 of the first planetary gear set, where it is being divided and imparted to pinion carrier 6 of the first planetary gear set, as well as to crown gear 10 of the second planetary gear set, and after that to pinion carrier 9 of the second planetary gear set, where it is being divided into two flows. The first flow of torque is imparted to pinion carrier of the first planetary gear set, where it is being combined with torque flow coming from sun pinion 5 of the first planetary gear set, and after that it is imparted to output member 4. The second flow of torque is being imparted via sun pinion 8 of the second planetary gear set and connected with it sun pinion 11 of the third planetary gear set to pinion carrier 12 of the third planetary gear set, and after that it is being combined with the flow of torque coming from input member 3.

When shifting to the fourth forward gear, brake 19 is shutting down and brake 18 is being actuated; coupling 15 remains being actuated. In such a way, rotational speed of crown gear 11 of connected with it sun pinion 8 of the second planetary gear set is equal to zero, and rotational speed of input member 3 is equal to rotational speed of sun pinion 5 of the first planetary gear set, connected with crown gear 10 of the second planetary gear set.

Torque from input member 3 via actuated friction clutch coupling 15 is imparted to sun pinion 5 of the first planetary gear set, where it is being divided and imparted to pinion carrier 6 of the first planetary gear set, as well as via crown gear 10 of the second planetary gear set it is imparted to pinion carrier 9 of the second planetary gear set and to the connected with it crown gear 7 of the first planetary gear set, and hereafter it is being imparted to pinion carrier 6 of first planetary gear set, where it is being combined with torque flow coming from sun pinion 5 of the first planetary gear set, and after that it is being imparted to output member 4.

When shifting to the fifth forward gear, brake 18 is shutting down and coupling 14 is being actuated; at that 15 remains being actuated. In such a way, rotational speed of input member 3 is equal to rotational speed of crown gear 5 of the first planetary gear set, connected with crown gear 10 of the second planetary gear set.

Torque from input member 3 is divided and, via actuated friction clutch coupling 15, is imparted to sun pinion 5 of the first planetary gear set and after that to pinion carrier 6 of the first planetary gear set, as well as via actuated friction clutch coupling 14 it is imparted to pinion carrier 9 of the second planetary gear set and to connected with it crown gear 7 of the first planetary gear set, and after that to pinion carrier 6 of the first planetary gear set, where it is combined with torque flow from sun pinion 11 of the third planetary gear set, and it is imparted to output member 4.

When shifting to the sixth forward gear, coupling 15 is shutting down and brake 18 is being actuated; coupling 14 remains being actuated. In such a way, rotational speed of input member 3 is equal to rotational speed of crown gear 7 of the first planetary gear set, connected with pinion carrier 9 of the second planetary gear set, and rotational speed of sun pinion 8 of the second planetary gear set, connected with sun pinion 11 of the third planetary gear set, is equal to zero.

Torque from input member 3 via actuated friction clutch coupling 14 is imparted to pinion carrier 9 of the second planetary gear set, where it is divided and, via crown gear 10 of the second planetary gear set and via connected with it sun pinion 5 of the first planetary gear set, it is imparted to pinion carrier 6 of the first planetary gear set, as well as via crown gear 7 of the first planetary gear set it is imparted to pinion carrier 6 of the first planetary gear set, where it is combined with torque flow coming from sun pinion 5 of the first planetary gear set, and after that it is being imparted to output member 4.

When shifting to the seventh forward gear, brake 18 is shutting down and brake 19 is being actuated; coupling 14 remains being actuated. In such a way, rotational speed of input member 3 is equal to rotational speed of crown gear 7 of the first planetary gear set, connected with pinion carrier 9 of the second planetary gear set, and rotational speed of crown gear 13 of the third planetary gear set is equal to zero.

Torque from input member 3 is divided, and via actuated friction clutch coupling 14 is imparted to pinion carrier 9 of the second planetary gear set, as well as via pinion carrier 12 of the third planetary gear set it is imparted to sun pinion 11 of the third planetary gear set and to connected with it sun pinion 8 of the second planetary gear set, and after that it is imparted to pinion carrier 9 of the second planetary gear set, where it is combined with torque flow coming from actuated friction clutch coupling 14. At pinion carrier 9 of the second planetary gear set, torque is divided and imparted via crown gear 7 of the first planetary gear set to pinion carrier 6 of the first planetary gear set, as well as via crown gear 10 of the second planetary gear set and via connected with it sun pinion 5 of the first planetary gear set it is imparted to pinion carrier 6 of the first planetary gear set, where it is combined with torque flow coming from crown gear 7 of the first planetary gear set, and after that it is imparted to output member 4.

When shifting to reverse gear, brake 18 and brake 19 are being actuated. In such a way, rotational speed of crown gear 13 of the third planetary gear set is equal to zero, and rotational speed of crown gear 10 of the second planetary gear set, connected with sun pinion 5 of the first planetary gear set, is equal to zero.

Torque from input member 3, via pinion carrier 12 of the third planetary gear set, is imparted to sun pinion 11 of the third planetary gear set and to connected with it sun pinion 8 of the second planetary gear set, and after that, via pinion carrier 9 of the second planetary gear set and via connected with it crown gear 7 of the first planetary gear set, it is imparted to pinion carrier 6 of the first planetary gear set, which is connected directly with output member 4.

The present invention allows providing for seven forward gears and one reverse gear for gearboxes having three planetary gear set, without increasing number of planetary gear sets and without significant increase of dimensions of case at the expense of increasing number of control elements, as well as by means of altering succession of pair-wise actuation of control elements.

The present invention is applicable in industry, as far as its realization does not require special new technology and special equipment, apart from those used in mechanical engineering for production of reducers, including planetary gear reducers.

## Claims

1. A gearbox, comprising a pinion carrier (6) of a first planetary gear set (5, 6, 7) represents an output member (4) of the gearbox, a pinion carrier (9) of a second planetary gear set (8,9,10) is connected with a crown gear (7) of the first planetary gear set, a sun pinion (5) of the first planetary gear set is connected with a crown gear (10) of the second planetary gear set and with the gearbox case (1) by means of a friction brake (16), sun pinion (8) of the second planetary gear set is connected with a sun pinion (11) of the third planetary gear set (11, 12, 13) with the gearbox case (1) by means of a friction brake (18), an input member (3) is connected with a pinion carrier (12) of the third planetary gear set, a crown gear (13) of the third planetary gear set is connected with the gearbox case (1) by means of a friction brake (19), **caracterized in that** the input member (3) is connected with the second planetary gear set pinion carrier (9) by means of a controllable friction clutch coupling (14), the crown gear (7) of the first planetary gear set is furnished with a friction brake (17) to provide for its connection with the gearbox case (1), the input member (3) is connected with a first planetary gear set sun pinion (5) by means of controllable friction clutch coupling (15), the input member (3) is connected with a torsion vibration damper (2).

## Patentansprüche

1. Ein Getriebe, einhaltend, ein Ritzelträger (6) des ersten Planetensatzes (5, 6, 7) bildet das Ausgangselement (4) des Getriebes, ein Ritzelträger (9) des zweiten Planetensatzes (8, 9, 10) ist mit dem Tellerrad (7) des ersten Planetensatzes verbunden, ein Sonnenrad (5) des ersten Planetensatzes ist mit einem Tellerrad (10) des zweiten Planetensatzes und mit dem Getriebegehäuse (1) durch eine Reibungsbremse (16) verbunden, Sonnenrad (8) des zweiten Planetensatzes ist mit dem Sonnenrad (11) des dritten Planetensatzes (11, 12, 13) mit dem Getriebegehäuse (1) durch eine Reibungsbremse (18) verbunden, das Eingangselement (3) ist mit einem Ritzelträger (12) des dritten Planetensatzes verbunden, ein Tellerrad (13) des dritten Planetensatzes ist mit dem Getriebegehäuse (1) durch eine Reibungsbremse (19) verbunden, **dadurch gekennzeichnet dass** das Eingangselemet (3) mit dem Ritzelträger (9) des zweiten Planetensatzes mittels einer steuerbaren Reibungskuplung (14) verbunden ist, ein Tellerrad (7) des ersten Planetensatzes ist mit einer Reibungsbremse (17) ausgestattet um eine Verbindung mit dem Getriebegehäuse (1) zur Verfügung zu stellen, das Eingangselement (3) ist mit dem Sonnenrad (5) des ersten Planetensatzes mittels einer steuerbaren Reibungskuplung (15) verbunden, das Eingangselement (3) ist mit einem Torsionsschwingungsdämpfer (2) verbunden.

## Revendications

1. La boîte de vitesses comprenant le porte-satellites (6) du premier train planétaire (5, 6, 7) représente l'organe de sortie (4) de la boîte de vitesses, le porte-satellites (9) du second train planétaire (8, 9, 10) est relié avec la couronne dentée (7) de du premier train planétaire, le pignon solaire (5) du premier train planétaire est relié à la couronne dentée (10) du second train planétaire et avec le corps de la boîte de vitesses (1) au moyen d'un frein à friction (16), le pignon solaire (8) du second train planétaire est relié au pignon solaire (11) du troisième train planétaire (11, 12, 13) et avec le corps de la boîte de vitesses (1) au moyen d'un frein à friction (18), l'organe d'entrée (3) est relié à la porte-satellites (12) du troisième train planétaire, la couronne dentée (13) du troisième train planétaire est relié au corps de la boîte de vitesses (1) au moyen d'un frein à friction (19), **caractérisé en ce que** l'organe d'entrée (3) est relié avec porte-satellites (9) du second train planétaire au moyen d'un accouplement à l'embrayage à friction réglable (14), la couronne dentée (7) du premier train planétaire est dotée d'un frein à friction (17) pour assurer sa connexion avec le corps de la boîte de vitesses (1), l'organe d'entrée (3) est reliée au pignon solaire (5) du premier train planétaire au moyen d'un accouplement à l'embrayage à friction réglable (15), l'organe d'entrée (3) est relié à l'amortisseur de vibrations de torsion (2).
